# EUROPEAN PATENT APPLICATION

(11) **EP 4 599 743 A1**
(43) Date of publication of application: **13.08.2025**
(21) Application number: 25153324.6
(22) Date of filing: 22.01.2025
(51) Int. Cl.: A47J 37/06, A21B 1/00, F24C 15/08, F24C 15/36

(54) **OVEN**

(30) Priority: 06.02.2024 TW 113104641
(71) Applicant: Grand Mate Co., Ltd., Taichung City 401 (TW)
(72) Inventor: HUANG, Chin-Ying, Taichung City 401 (TW); HUANG, Hsin-Ming, Taichung City 401 (TW); HUANG, Hsing-Hsiung, Taichung City 401 (TW); YEH, Yen-Jen, Taichung City 401 (TW)
(74) Representative: Viering, Jentschura & Partner mbB Patent- und Rechtsanwälte

(57) **Abstract**

An oven (1, 2) includes an oven body (10), a heating element (28), and at least one guard board (30). The oven body (10) includes a front plate (12) and a cover (16). The front plate (12) has an entrance (122) that communicates with an inside of the oven body (10). The cover (16) has a front end (18) that is connected to the front plate (12). The heating element (28) is disposed in the oven body (10). The at least one guard board (30) is disposed on a periphery of the cover (16), wherein an interval space (S) is formed between the at least one guard board (30) and an outer surface (16a) of the cover (16) and a periphery of the interval space (S) communicates with an outside of the oven (1, 2), thereby preventing the user from being burned by the oven body (10).

## Description

### BACKGROUND OF THE INVENTION

### Technical Field

The present invention relates generally to a heating apparatus, and more particularly to an oven.

### Description of Related Art

A conventional oven includes an oven body and a heating element. The oven body has an inner space for placing objects to be baked. The oven body has an entrance that communicates with the inner space. The objects to be baked could be put into the inner space or be taken out from the inner space through the entrance. The heating element is adapted to heat the inner space.

During a baking process, the inner space is at a high temperature. Therefore, a heat of the inner space would be conducted to an outer surface of the oven body, which would increase a temperature of the outer surface of the oven body. When a user accidentally touches the outer surface of the oven body, the user might be burned easily.

Therefore, the conventional oven still has room for improvement.

### BRIEF SUMMARY OF THE INVENTION

In view of the above, the primary objective of the present invention is to provide an oven, which could prevent a user from being burned by an oven body.

The present invention provides an oven, including an oven body, a heating element, and at least one guard board. The oven body includes a front plate and a cover, wherein the front plate has an entrance that communicates with an inside of the oven body; the cover has a front end that is connected to the front plate. The heating element is disposed in the oven body. The at least one guard board is disposed on a periphery of the cover, wherein an interval space is formed between the at least one guard board and an outer surface of the cover, and a periphery of the interval space communicates with an outside of the oven.

With the aforementioned design, the at least one guard board could prevent the user from directly touching the cover of the oven body, which effectively prevents the user from being burned by the oven body.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of the oven of a first embodiment according to the present invention;
FIG. 2 is a perspective view of the oven of the first embodiment according to the present invention seen from another perspective;
FIG. 3 is a front-side view of the oven of the first embodiment according to the present invention;
FIG. 4 is a partially exploded view of the oven of the first embodiment according to the present invention;
FIG. 5 is a perspective view of the exhaust hood of the first embodiment according to the present invention;
FIG. 6 is a sectional view along the A-A line in FIG. 3, showing the column is fixed by the bolt and the nut;
FIG. 7 is a partially exploded view of the oven of a second embodiment according to the present invention; and
FIG. 8 is a front-side view of the oven of the second embodiment according to the present invention.

### DETAILED DESCRIPTION OF THE INVENTION

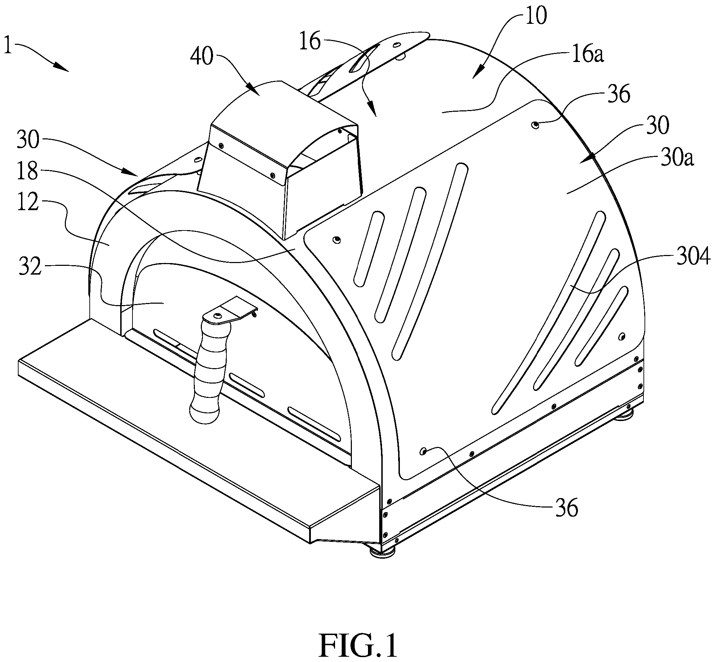

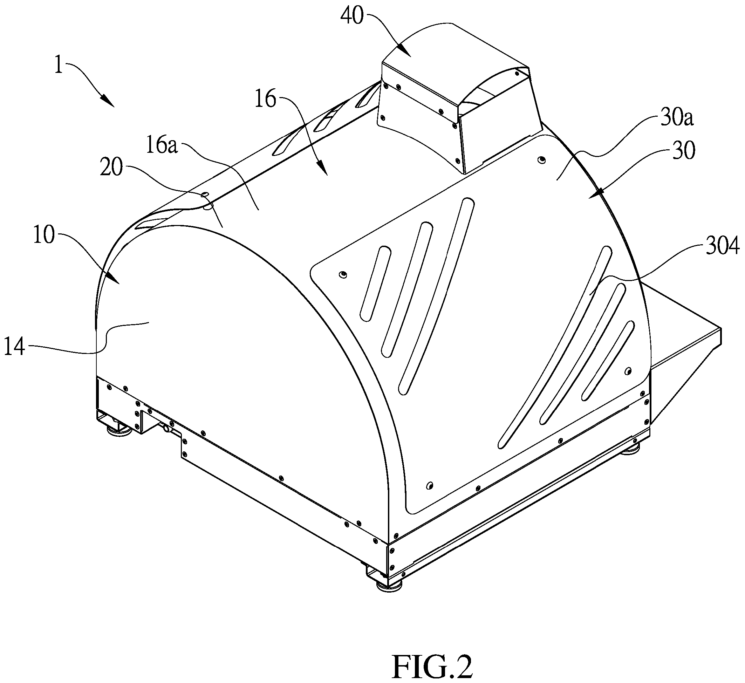

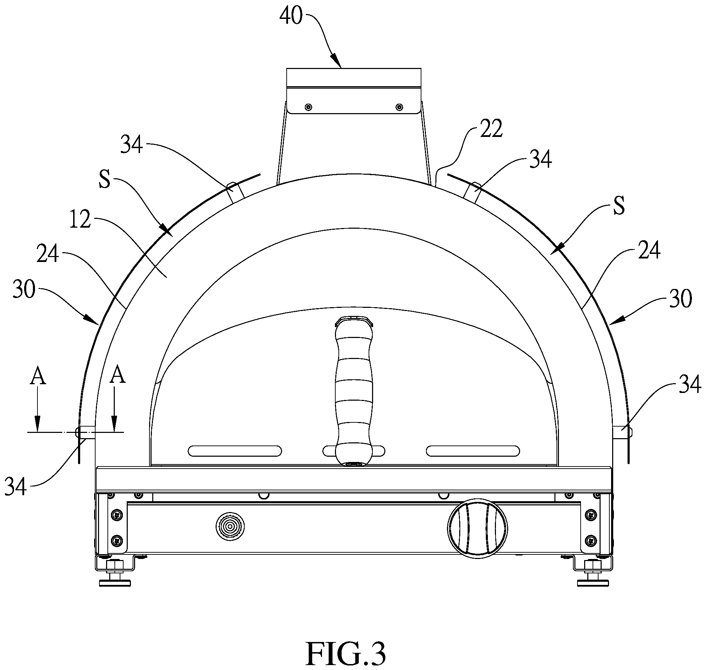

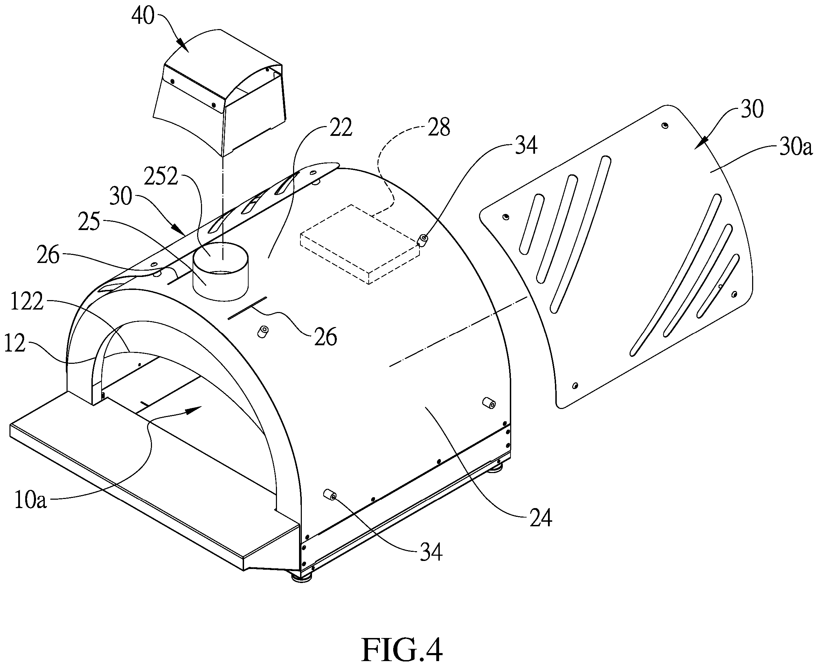

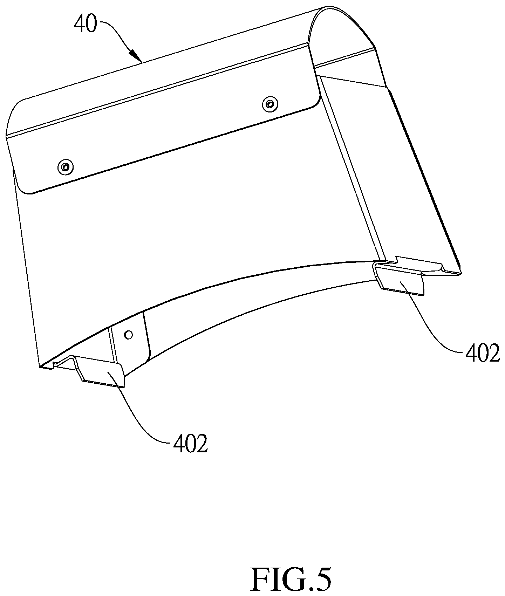

As illustrated in FIG. 1 to FIG. 6, an oven 1 of a first embodiment according to the present invention includes an oven body 10, a heating element 28, and at least one guard board 30.

The oven body 10 includes a front plate 12, a back plate 14, and a cover 16. A material of the front plate 12, a material of the back plate 14, and a material of the cover 16 are metal. The oven body 10 is an arched shape, but not limited thereto; the oven body 10 might be a trapezoid shape, a rectangular shape, or other shapes. An inside of the oven body 10 has a baking space 10a. The front plate 12 and the back plate 14 are opposite to each other. The front plate 12 has an entrance 122 that communicates with the baking space 10a of the oven body 10. An oven door 32 is detachably closed the entrance 122. The cover 16 is located between the front plate 12 and the back plate 14. The cover 16 has a front end 18 and a back end 20, wherein the front end 18 is connected to the front plate 12, and the back end 20 is connected to the back plate 14. In the first embodiment, the cover 16 is a curved plate. The cover 16 has a top portion 22 and two side portions 24. An exhaust pipe 25 passes through the top portion 22. The exhaust pipe 25 has an exhaust port 252 that communicates with the baking space 10a. The exhaust pipe 25 extends upwardly, so that the exhaust port 252 is located higher than the top portion 22 of the cover 16. In this way, a heat exhaust of the baking space 10a is discharged upwardly at a position away from the cover 16, so that the heat exhaust discharged is away from the top portion 22 of the cover 16. The two side portions 24 are located lower than the top portion 22. The two side portions 24 are respectively located on two opposite sides of the top portion 22.

The heating element 28 is disposed in the oven body 10 and heats the baking space 10a. In the first embodiment, the heating element 28 is a gas burner, but not limited thereto; the heating element 28 might be an electric heater.

The at least one guard board 30 is disposed on a periphery of the cover 16. In the first embodiment, the at least one guard board 30 includes two guard boards 30, wherein the two guard boards 30 are respectively disposed on the two side portions 24. Each of the guard boards 30 is a curved plate and is a metal plate, but not limited thereto; each of the guard boards 30 might be a heat-resistant plastic plate or a metal plate with an outer surface covered with an insulation, wherein the insulation might be a rubber as an example. An interval space S is formed between an inner surface 30b of each of the guard boards 30 and an outer surface 16a of the cover 16 and a periphery of the interval space S communicates with an outside of the oven 1 for air to flow through to achieve the heat dissipation effect.

In the first embodiment, the oven body 10 further includes a plurality of columns 34. Each of the guard boards 30 is supported on the periphery of the cover 16 by a few of the columns 34 (e.g., four columns 34) to form the interval space S. An end of each of the columns 34 is connected to the cover 16, and another end of each of the columns 34 is connected to the corresponding guard board 30. Each of the columns 34 is made of bakelite; an advantage of using bakelite is that bakelite is strong enough to support the guard boards 30 and is not prone to conducting heat, thereby preventing the heat of the cover 16 from being conducted to the guard boards 30.

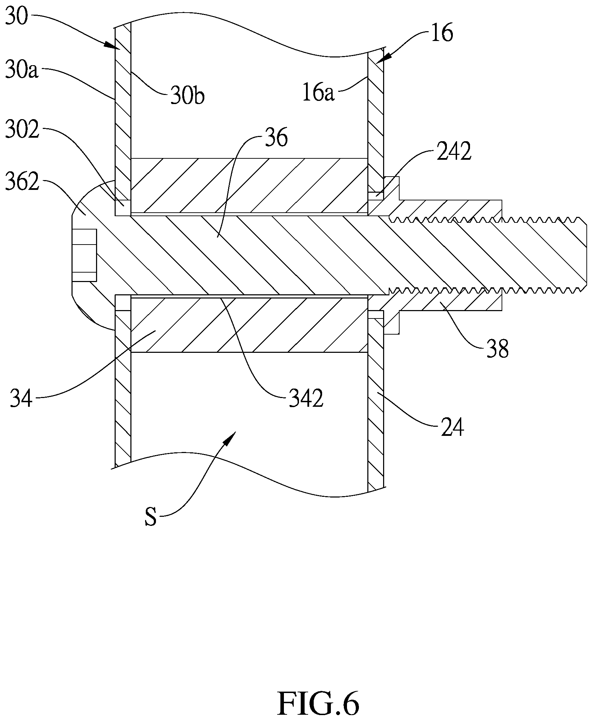

In the first embodiment, as shown in FIG. 6, each of the columns 34 is fixed by a bolt 36 and a nut 38. More specifically, each of the guard boards 30 has a plurality of first through holes 302. Each of the side portions 24 of the cover 16 has a plurality of second through holes 242. Each of the second through holes 242 corresponds to each of the first through holes 302 of each of the guard boards 30. Each of the columns 34 has a channel hole 342, wherein the channel hole 342 penetrates two ends of the column 34. Two ends of the channel hole 342 of each of the columns 34 respectively correspond to each of the first through holes 302 and each of the second through holes 242. Each of the bolts 36 passes through each of the first through holes 302 of each of the guard boards 30, the channel hole 342 of each of the columns 34, and each of the second through holes 242 of the cover 16 in sequence, so that a head portion 362 of each of the bolts 36 abuts against an outer surface 30a of each of the guard boards 30, and each of the nuts 38 is located on an inside of the cover 16 and is screwed to each of the bolts 36 to fix each of the columns 34. The two ends of each of the columns 34 respectively abut against the inner surface 30b of each of the guard boards 30 and the outer surface 16a of the cover 16 to support each of the guard boards 30 and form each of the interval spaces S.

Each of the guard boards 30 has a plurality of hollow portions 304. Each of the hollow portions 304 penetrates the outer surface 30a of each of the guard boards 30 and the inner surface 30b of each of the guard boards 30, so that each of the hollow portions 304 communicates with the corresponding interval space S, thereby further reducing a temperature of each of the guard boards 30. Each of the hollow portions 304 might be a rectangle shape, a character symbol shape, or other shapes.

Each of the guard boards 30 could prevent the user from directly touching the cover 16 of the oven body 10, which effectively prevents the user from being burned by the cover 16.

In addition, in the first embodiment, the oven body 10 might further include an exhaust hood 40, wherein the exhaust hood 40 is detachably engaged with the top portion 22 of the cover 16 and communicates with the exhaust port 252 of the exhaust pipe 25. The exhaust hood 40 caps a periphery of the exhaust pipe 25, so that the exhaust pipe 25 is located in the exhaust hood 40. More specifically, a bottom portion of the exhaust hood 40 has two insertion plates 402. The top portion 22 of the cover 16 has two insertion slots 26 which are located on two opposite sides of the exhaust pipe 25. The two insertion plates 402 of the exhaust hood 40 are detachably inserted into the two insertion slots 26. In this way, when the user wants to remove the exhaust hood 40, the user just pulls out the exhaust hood 40 and the exhaust hood 40 could be removed.

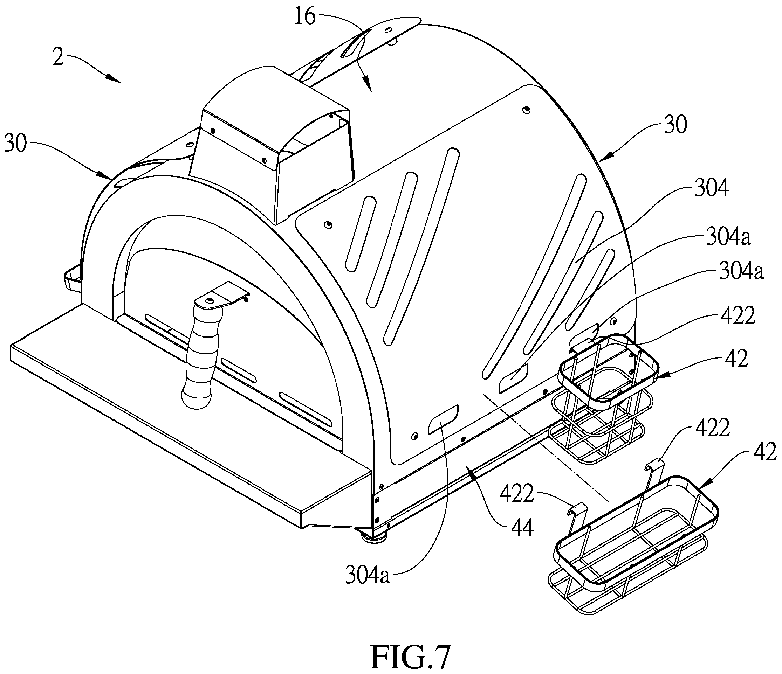

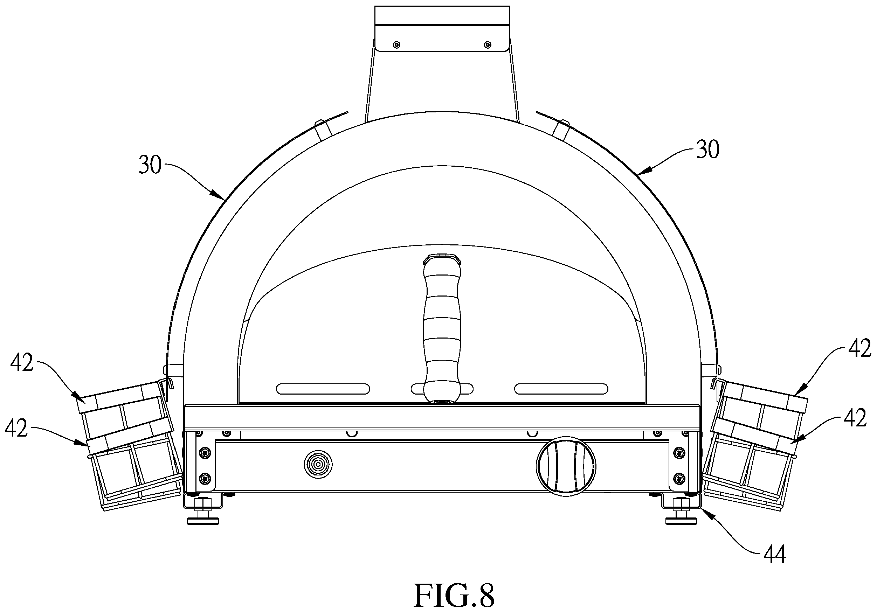

An oven 2 of a second embodiment according to the present invention is shown in FIG. 7 and FIG. 8, which has almost the same structure as the oven 1 of the first embodiment, except that the hollow portions 304 on the guard boards 30 of the second embodiment include at least one hanging hole 304a. In the second embodiment, the at least one hanging hole 304a includes a plurality of hanging holes 304a, which is located at a position near a bottom portion of the guard boards 30.

In addition, the oven 2 might further include at least one accessory 42. In the second embodiment, the at least one accessory 42 includes a plurality of accessories 42. Each of the accessories 42 has a hook portion 422 or a plurality of hook portions 422, wherein the hook portion 422 (the hook portions 422) could be used to hang in one or multiple of the hanging holes 304a that is corresponding. In this way, each of the accessories 42 could be hung on each of the guard boards 30, and a bottom portion of each of the accessories 42 could abut against a base 44 of the oven body 10 to improve the stability. Each of the accessories 42 is a basket, but not limited thereto; each of the accessories 42 might be a kitchenware having the hook portion 422.

It must be pointed out that the embodiments described above are only some preferred embodiments of the present invention. All equivalent structures which employ the concepts disclosed in this specification and the appended claims should fall within the scope of the present invention.

## Claims

1. An oven (1, 2), comprising:
an oven body (10) comprising a front plate (12) and a cover (16), wherein the front plate (12) has an entrance (122) that communicates with an inside of the oven body (10); the cover (16) has a front end (18) that is connected to the front plate (12);
a heating element (28) disposed in the oven body (10); and
at least one guard board (30) disposed on a periphery of the cover (16), wherein an interval space (S) is formed between the at least one guard board (30) and an outer surface (16a) of the cover (16), and a periphery of the interval space (S) communicates with an outside of the oven (1, 2).

2. The oven (1, 2) as claimed in claim 1, further comprising a plurality of columns (34), wherein an end of each of the plurality of columns (34) is connected to the cover (16), and another end of each of the plurality of columns (34) is connected to the at least one guard board (30).

3. The oven (1, 2) as claimed in claim 2, wherein each of the plurality of columns (34) is made of bakelite.

4. The oven (1, 2) as claimed in claim 2, further comprising a plurality of bolts (36) and a plurality of nuts (38), wherein the at least one guard board (30) has a plurality of first through holes (302); the cover (16) has a plurality of second through holes (242); each of the plurality of columns (34) has a channel hole (342); two ends of the channel hole (342) of each of the plurality of columns (34) respectively correspond to each of the plurality of first through holes (302) and each of the plurality of second through holes (242); each of the plurality of bolts (36) passes through each of the plurality of first through holes (302) of the at least one guard board (30), the channel hole (342) of each of the plurality of columns (34), and each of the plurality of second through holes (242) of the cover (16) in sequence; each of the plurality of nuts (38) is located on an inside of the cover (16) and is screwed to each of the plurality of bolts (36) to fix each of the plurality of columns (34).

5. The oven (2) as claimed in claim 1, wherein the at least one guard board (30) has a plurality of hollow portions (304); each of the plurality of hollow portions (304) communicates with the interval space.

6. The oven (2) as claimed in claim 5, wherein the plurality of hollow portions (304) comprises at least one hanging hole (304a).

7. The oven (2) as claimed in claim 6, further comprising at least one accessory (42), wherein the at least one accessory (42) has at least one hook portion (422); the at least one hook portion (422) hangs in the at least one hanging hole (304a).

8. The oven (1, 2) as claimed in claim 1, further comprising an exhaust hood (40) and an exhaust pipe (25), wherein a bottom portion of the exhaust hood (40) has two insertion plates (402); the exhaust pipe (25) passes through a top portion (22) of the cover (16); the top portion (22) of the cover (16) has two insertion slots (26) which are located on two opposite sides of the exhaust pipe (25); the two insertion plates (402) of the exhaust hood (40) are detachably inserted into the two insertion slots (26) and the exhaust pipe (25) is located in the exhaust hood (40).

9. The oven (1, 2) as claimed in claim 1, further comprising an exhaust hood (40), wherein the cover (16) has a top portion (22) and two side portions (24); the exhaust hood (40) is engaged with the top portion (22) of the cover (16); the two side portions (24) are respectively located on two opposite sides of the top portion (22); the at least one guard board (30) comprises two guard boards (30), and the two guard boards (30) are respectively disposed on the two side portions (24).
